# EUROPEAN PATENT SPECIFICATION

(11) **EP 3 748 811 B1**
(45) Date of publication and mention of the grant of the patent: **18.05.2022**
(21) Application number: 20178022.8
(22) Date of filing: 03.06.2020
(51) Int. Cl.: H02J 13/00, H02H 3/00, H02H 1/00

(54) **A METHOD FOR CONFIGURING AN INTELLIGENT ELECTRONIC DEVICE AND A SYSTEM THEROF**
VERFAHREN ZUR KONFIGURATION EINER INTELLIGENTEN ELEKTRONISCHEN VORRICHTUNG UND SYSTEM DAFÜR
PROCÉDÉ DE CONFIGURATION D'UN DISPOSITIF ÉLECTRONIQUE INTELLIGENT ET SYSTÈME ASSOCIÉ

(30) Priority: 04.06.2019 IN 201941022256
(43) Date of publication of application: 09.12.2020
(73) Proprietor: ABB Schweiz AG, 5400 Baden (CH)
(72) Inventor: Gopalakrishnan, Abhilash, 560067 Bengaluru (IN); Putanvetil, Jithin Kizhakey, 673633 Kerala (IN)
(74) Representative: Zimmermann & Partner Patentanwälte mbB

(56) References cited:
- EP-A1- 3 026 519
- WO-A2-2006/060371

## Description

### FIELD OF THE INVENTION

The present invention relates generally to the field of protection and control of electrical equipment by an intelligent electronic device (IED) and more particularly to a method for configuring an IED.

### BACKGROUND OF THE INVENTION

Substation Automation consists of protection, control, monitoring and metering functions of the various substation equipment such as transformers, reactors, capacitor banks, circuit breakers, disconnector switches etc. High speed Microprocessor based intelligent electronic devices (IEDs), which usually are embedded system, are used for substation automation. IEDs are placed and installed at various location to acquire data from equipment and can be configure to automatedly protect those equipment. For instance, a protective relay IED can monitor current load and protect the equipment's by controlling a circuit breaker. Typically, the IEDs can perform monitoring by receiving data from sensors and power equipment, and can issue control commands, such as tripping circuit breakers if they sense voltage, current, or frequency anomalies.

The number of electronic embedded devices used in smart grid applications for monitoring and control purposes is increasing. Most of the smart grid embedded IEDs run application functions that perform various tasks such as monitoring, control of a device, etc.

Electrical Relays and Automation Control Systems (such as SCADA and DCS) come with Application Functions defined as libraries or other components (such as modules, frameworks, machine-executable elements, etc.). These application functions take as input different data from a variety of data sources such as different sensors associated with the equipment or/and input/output cards. The application function can utilize the data thus collected for a variety of application such as monitor the health and make assessment on the performance efficiency of the equipment (such as physical devices). The data can also be used by the application functions to either make (or enable making) decisions on taking actions related to processes performed by any equipment. The action could be for instance sending out an alarm signal to indicate an error, reset a circuit breaker in response to a current or voltage measurement, etc. Thus the application functions associated with the embedded devices can perform monitoring, protection and control of physical devices/primary/secondary equipment.

A network of functions is used to build applications like feeder control, motor protection, motor control and so on. Traditionally, the development of these functions has been done in a model based manner or hand coded manner based on electrical or control system standard literature. With the growing complexity and scale of the functions and increasing number of parameters, constraints and dependencies among functions, there is a need for methods and system to truthfully model the functions while taking into account all the parameters. The new scenarios of distributed control and reduced borders across control systems also require a certain dynamic behavior such as self-healing and self-adapting that allows the functions to work optimally in changing or unpredictable environments. Also it is important to focus on the new value added functions and algorithms which have higher adaptability and more suitable for self healing scenarios. Such function can lead to increasing reliability, lower maintenance costs, shorter repair cycles, reduced reliance on human or expert intervention for fault resolution. Self healing aims to have a system that is able to heal itself from fault or failure states without any human interaction. It can have various pre-defined actions and procedures that are suitable for system self-recovery or self-recovery can be brought about through AI/ML algorithm implementation.

Moreover, for the automation system vendors with existing installations, the strength is in the available data. That is, the pre-existing installations have a rich repositories of configuration parameters (operational and non-operation data) gathered over the lifecycle of the installation. Major part of operational data captured includes data of real-time status for example like CB Open/Close status, Line Current, Bus Voltage, Transformer Loading data, etc., The non-operational data includes Events and Alarms, Disturbance and fluctuation Records, CB lubrication and contact wear data, maintenance related data, etc. The non-operational data are not yet optimally and productively used. Non operational data is used for post event analysis of failures,
while there is a huge value of using this data for improving the algorithms in protection and control.

It is a challenge to design and test such a system with multiple interdependencies in the field. It can be very time consuming to track the failure and all its dependencies and then take corrective action that doesn't result in other system disturbances.

There is a need for development of system and methods to keep the application functions updated and performing with better efficiency such as faster execution time, efficient fault classification, accurate fault location, ability to analyse newer data sources, perform newer forms of data integration, adapt to changing requirements of communication protocols and standards etc.

WO 2006/060371 A2 discloses an exemplary method for configuring an intelligent electronic device in a power delivery system. EP 3 026 519 A1 relates to a processor-implemented method for determining an expected overall performance value of a substation automation system.

### SUMMARY

The above-mentioned shortcomings, disadvantages and problems are addressed herein which will be understood by reading and understanding the following specification.

The present invention provides a method for configuring an intelligent electronic device (IED) according to claim 1.

The method comprising the computing system performing the step of firstly, receiving a plurality of measured electrical signals, and configuration parameters associated with measured electrical signals, the at least one application function and status of equipment from the IED.

Secondly, determining at least one first performance parameter for the at least one virtual application function using the virtual model.

Thirdly, adapting the virtual model based on the received plurality of measured electrical signals and configuration parameters for the at least one virtual application function by updating functional parameters of the at least one virtual application function;

Fourthly, determining at least one second performance parameter for the at least one virtual application function using the adapted virtual model;

Fifthly, comparing the difference between the at least one first performance parameter and the at least one second performance parameter to determine an improvement in the virtual model for the at least one application function with a preset performance threshold;

Finally, transmitting functional parameters of the at least one virtual application function comprised in the virtual model to configure the corresponding at least one application function of the IED based on significance of the difference between the at least one first performance parameter and the at least one second performance parameter.

In an embodiment, the measured electrical signal is at least one of a current signal and a voltage signal.

In an embodiment, the configuration parameters comprises data related to circuit breaker close/open status, line current, bus voltage, transformer loading data, events, alarms, disturbance and fluctuation records, circuit breaker lubrication and contact wear data, maintenance related data.

In an embodiment, the first performance parameter comprises performance parameters obtained at a first instant of time, and the second performance parameter comprises performance parameters obtained at a second instant of time, wherein the performance parameters comprises accuracy, time to operate, round trip time, latency, metrics in terms of faster execution, prediction capability.

In an embodiment, adapting the virtual model based on the received plurality of measured electrical signals and configuration parameters comprises labelling samples by obtaining pre-processed inputs and outputs and labels the samples for training leading to preparing probability tables/training result set.

In another aspect, the present invention provides a system for configuring an Intelligent Electronic Device (IED) for providing an improved performance of the IED according to claim 6. According to the invention, the computing system is configured to:
firstly, receive a plurality of measured electrical signals, and configuration parameters associated with measured electrical signals, the at least one application function and status of equipment from the IED;
secondly, determine at least one first performance parameter for the at least one virtual application function using the virtual model;
thirdly, adapt the virtual model based on the received plurality of measured electrical signals and configuration parameters for the at least one virtual application function by updating functional parameters of the at least one virtual application function;
fourthly, determine at least one second performance parameter for the at least one virtual application function using the adapted virtual model;
Fifthly, compare the difference between the at least one first performance parameter and the at least one second performance parameter to determine an improvement in the virtual model for the at least one application function with a preset performance threshold;
Finally, transmit functional parameters of the at least one virtual application function comprised in the virtual model to configure the corresponding at least one application function of the IED based on significance of the difference between the at least one first performance parameter and the at least one second performance parameter.

In an embodiment of system mentioned above the computing system is at least one of an edge device, a cloud computing node or both.

### BRIEF DESCRIPTION OF DRAWINGS

The appended drawings illustrate exemplary embodiments as disclosed herein and are not to be considered limiting in scope. In the drawings:
Figure 1a shows a typical physical device and a representation of the physical device with its components;
Figure 1b shows a virtual model configured as a digital representation or digital twin of the physical device;
Figure 2 shows a representation of a system for configuring an IED;
Figure 3 shows the physical device communicating with the digital twin directly and via a server;
Figure 4a represents training data showing labelled samples for an overcurrent function;
Figures 4b and Figure 4c represent probability tables with training data for circuit breaker monitoring;
Figure 5 shows the method for configuring the IED.

### DETAILED DESCRIPTION

The present invention provides a method for configuring an intelligent electronic device (IED) to provide an improved performance by using a virtual model that is hosted in a computing system. The present invention provides a technique that enables use of the virtual model that is a high-fidelity digital representation of the physical device/equipment or process. This digital representation (virtual model) of the physical system or device is referred to as the digital twin. The digital twin also involves development of a virtual environment in which logical models replace physical entities for evaluation, verification and optimization and addition of functionalities. While the physical device exists and evolves in the real space, the digital twin is a virtual device equivalent that exists and evolves in the virtual space. The physical device and its digital twin are connected through data and bi-directional information exchange which facilitates a high-fidelity representation. Some aspects of high-fidelity involves, for instance, keeping the two systems (physical device and digital twin) synchronized and self-consistent at all times in terms of state and under all conditions.

In the following detailed description, reference is made to the accompanying drawings that form a part hereof, and which is shown by way of illustration specific embodiments, which may be practiced. These embodiments are described in sufficient detail to enable those skilled in the art to practice the embodiments, and it is to be understood that other embodiments may be utilized. The following detailed description is, therefore, not to be taken in a limiting sense.

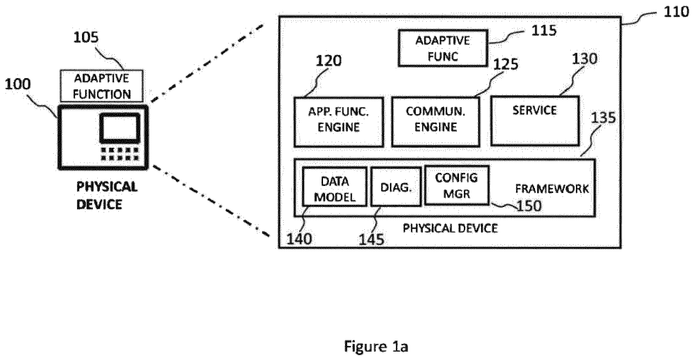

Figure 1a shows a representation of a typical physical device 100 and a representation of the physical device 100 with all the components in a manner that facilitates constructing its digital twin. The physical device is an IED.

The IED can be connected in an electrical network for protection and control of electrical equipment, like a transformer, by analysis of measured electrical signal i.e., voltage signal or current signal with an application function for example a function for overcurrent protection. And a trip signal is generated by the IED to operate a circuit breaker connected in series with the electrical equipment that needs to be protected.

In an embedded physical device or an IED (100), an adaptive function (105, 115) is typically any application function that can dynamically adapt its behavior at run-time in response to changing conditions. The changing conditions could be, for instance, change in computing and communication infrastructure, changes in the surrounding physical environment like addition of renewables or distributed energy sources etc. An adaptive function/application function (105, 115) can typically be updated in a manner that improves various performance parameters or enhance existing functions.

The present invention provides a means to implement artificial intelligence (AI) and machine learning (ML) to improve the various performance parameters of the application functions. AI and ML are well-suited to the task of constructing intelligent software applications that are adaptive. ML implementation to improve the adaptive functions is based typically on the data that the specific physical devices process.

Machine learning libraries typically have a variety of algorithms for each problem formulation. For example, classification tasks where you are learning how to classify a new vector based on a set of positive and negative training examples can be performed by deep learning / neural network models, decision trees, Bayes-Classifiers, logistic regression, and support-vector-machines (SVMs). Each of these have a variety of parameters that can be tweaked.

Functionally, the physical device 100 can be represented as a system that consists of a Framework 135, Application Function Engine 120, Application Functions 115, and Communication Engine 125 as separate elements connected to the field over hardwired lines or over a bus running an Adaptive Function (105, 115). The framework 135 is defined as a collection of executable models that specify relevant functional aspects specific to the physical device 100. It formulates the structure and behaviour within a given application domain. The framework 135 also consists of a configuration manager 150, a data model unit 140, and a diagnostic unit 145.

The configuration manager 150 can facilitate in configuring various interactions between the executable models that constitute the functional representations of the physical device. The configuration manager 150 could also help with such processes as setting the precedence order of function module execution, synchronous and asynchronous aspects of parameters and data passing between various dependent functions.

A data model 140 unit organizes different data elements of the device and standardizes how the data elements relate with one another. The data can be structured or unstructured. It can also be of any format, such as arbitrary binary data, text, JSON, or serialized protocol buffers. The data elements could have components such as internet protocol (IP) address and MAC address of the physical device, specific technical configuration information of the device (such as interrupt request lines, input/output ports, etc), tag and identifier information associated with the device, hardware, software, and firmware versions, device model and state information (such as health of the device, current operational state

A diagnostic module 145 is a software component that facilitates monitoring various aspects of a device to provide system diagnostics. It can monitor parameters such as voltage, current, device internal temperature,

The application engine 120 facilitates build and run of application functions 115 on the physical device 100 or a computational unit embedded in the physical device. The various application functions enable performing device specific tasks such as a measurement of some parameter or control of an actuator etc. The communications engine 125 offers a platform for various connectivity options for data transfer among devices, between sensors and devices, between device and a gateway, between device and data management systems, etc. It enables using different network types such a wide area network (WAN), local area network (LAN), near-field communication (NFC) etc. and different communication protocols and standards such as Message Queuing Telemetry Transport (MQTT) etc.

The service modules 130 in the physical device can correspond to any of the service components such as error and failure diagnosis, health and performance monitoring, etc. The service module 130 can integrate all the different service components to accomplish required service functions. The adaptive function could be running on the communication engine or/and the application function engine. These will be the functions that can dynamically adapt its behaviour either at run-time or compile-time in response to changing conditions in the sup-porting computing and communication infrastructure, and in the surrounding physical environment. There can be adaptations like sensor inputs for CT,VT, CANBUS communication for HMI, or new functions itself could be discovered from the system like EMI detection function, pattern based protection using PMU etc. Adaptations could also come in the form of new variations in products like application function libraries (AFLs) where new applications based on Temperate, Humidity

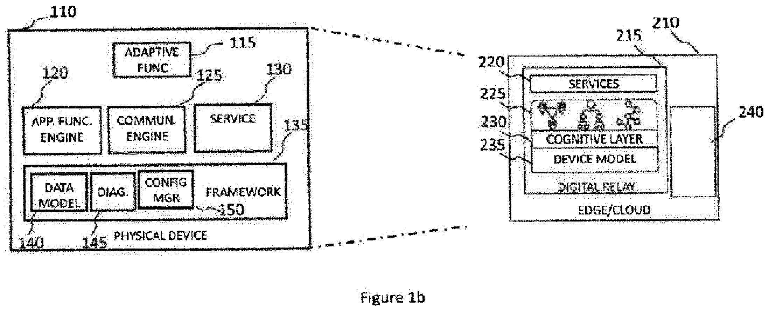

Figure 1b shows a virtual model configured as a digital representation or digital twin 210 of the physical device 110. The digital representation consisting of a device model 235 representing the device itself; a cognitive layer 230; the services module 220; and a training module 240. The virtual model configured as the digital twin is hosted in a computing system in an edge device or in cloud. The virtual model or digital twin of the physical device also comprise virtual application functions corresponding to the application/adaptive function hosted on the physical device.

The device model 235 consists of a logical model that represents functional aspects of the physical device 110. Functionally, device model 235 of the digital twin 210 is composed of units of the physical device 110 more specifically the framework 135 that contains the data model unit 140, the diagnostic module 145, the application function engine 120, communication engine 125 and the configuration manager 150.

The cognitive layer 230 of the digital twin 210 consists of components to make application functions adaptive, using for instance machine learning algorithms to improve them based on the data they process in their specific environments. The training module 240 uses services form cognitive layer 230 to perform a machine learning based training. The cognitive layers 230 also facilitates programming intelligent applications and modules that operate in real environments, and in virtual environments that are designed to simulate real environments.

Services module 220 forms the topmost layer of this virtual model. The service module 220 in the physical device can correspond to any of the service components such as error and failure diagnosis, health and performance monitoring, etc. The service module 220 can integrate all the different service components to accomplish required service functions. The services could provide forms of self -contained microservices or similar web interface support or support for edge communication interfaces.

Training module 240 listens to (preprocessed) inputs and outputs and labels the samples for training leading to preparing probability tables or training result set. Labeling is done on the training module at the edge/cloud. In another case for a condition monitoring function like CB Monitoring the probability table prepared on naive bayes classification is done by training module. A digital twin is a digital representation of a real world entity. The entity could be a device or an equipment or/and a system or/and a sub-system. The entity could also represent a collection of one or more of the mentioned entities. They could represent either an embedded device or/and a non-embedded device.

The capabilities and characteristic features of the digital twin will be defined by the specific physical device and its environment that is being represented. For accurate modelling, prediction, and analysis, the digital twin should be a high-fidelity representation of the physical device. This is accomplished by ensuring the digital twin accurately represents the communication aspects and the operational or functional aspects of the physical device through exchange of data and information between the physical and the digital counterparts. Typically, a physical device has associated with it multiple sensors that can acquire data and relay it to the digital twin so both reinforce each other's evolution.

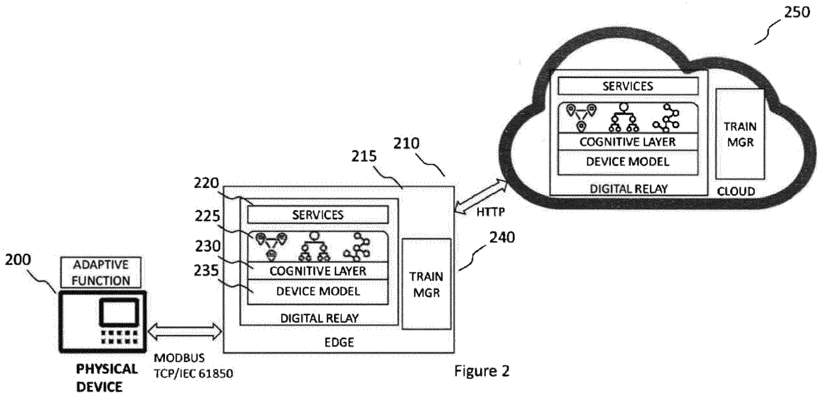

Figure 2 shows a typical representation of a system for configuring an IED, the system broadly comprises the following elements the physical device and a digital twin hosted on an edge device 210 or a cloud computing node 250 or both.

A physical device 200 is the device for which a digital twin 210, 250 is constructed. It could be an independent equipment or a collection of equipment or devices that constitute a system. Figure 1a is representative of a physical device and its functional architecture. The digital twin can be hosted on the edge or/and on the cloud.

The edge device could be a server/computing system on the client premises that hosts the constructed digital twin 210. The edge device could also be a gateway that, for instance, interfaces with a cloud service for implementing the digital twin. The edge device is configured as appropriate test platform to enable constructing an accurate model of the physical device. Such a model is based typically on both a physics-based model and also a data-driven model. The edge device can consist of more than one instance of Digital Twin consisting of Device Model comprising of Framework, Application Engine, And Application Functions and Communication Engine, as separate elements connected to the field over hardwired lines or a bus and additionally cognitive layer , Training module and Services. Each instance can be configured, for instance, to implement the digital twin with different parameters (such as ML algorithms) or/and the instances could model one or more parts of the digital twin. In another embodiment of the digital twin implementation, additional instances could correspond to a reference digital twin that models the ideal behaviour for the corresponding physical device. In yet another embodiment, the collection of instances could represent various ensembles that facilitates modelling an ensemble average for the behavior of the physical device under a range of conditions and configurations under which a device operates. The Edge device node has ability to run more than one instance of device and possess digital data over sensors in form of samples.

A Cloud Device Node: The cloud device is a cloud computing node and can host the constructed digtial twin 250. The cloud device is configured as an appropriate test platform to enable constructing an accurate model of the physical device. Such a model could be based on both a physics-based model and also a data-driven model. The cloud device can consist of more than one instance of Digital Twin including Device Model comprising of Framework, Application Engine, And Application Functions and Communication Engine as separate elements connected to the field over hardwired lines or a bus, and additionally cognitive layer , Training module and Services. The cloud device node has ability to run more than one instance of device and possess digital data over sensors in form of samples.

The cloud service, which can be provided with increased computing power, also enables performing computationally expensive modelling and analysis that may not be feasible on a edge device. The cloud service could also enable a comparative analysis of the performance of the physical device across different clients.

A Digital Twin (210, 250): This constitutes the virtual representation of the physical device. A digital twin instance of the target (physical) device is implemented to run on the Cloud and is connected over the Edge Device. A digital twin instance can also be implemented on the edge device. The Twin and the Target Physical Device both know each other and recognize by means of a Unique Identifier.

In order for the digital twin to accurately represent the physical device, it must be configured using the real-time or near real-time data and configurations of the corresponding physical device. All interactions between the modules that constitute the functional representations of the physical device and its digital twin are connected and configured by a configuration manager.

For primary/secondary equipment, the twin can be used for monitoring to facilitate real-time monitoring, diagnosis and prognosis, maintenance, process performance analysis, etc.

The configuration could involve such elements as the precedence order of function module execution, periodicity and temporal characteristics such as the synchronous and asynchronous aspects of parameters and data passing between various dependent functions, etc.

The function modules implemented on different parts of the device may need to exchange data over a bus. Configuration manager must also manage the sequence in which information is transmitted between function modules on one more device components. The configuration can also used to add additional sensor modules, I/O modules; encoder modules; add devices and enable or expand functionalities.

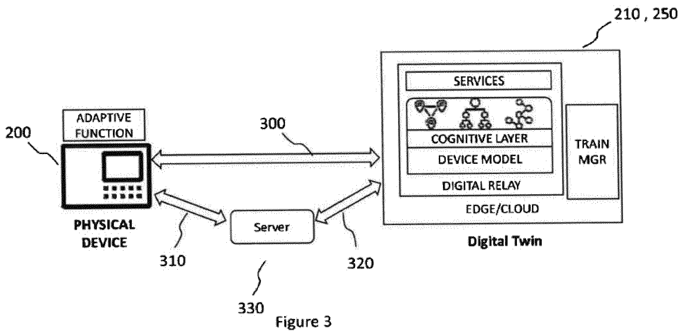

Figure 3 shows the physical device 200 communicating with the digital twin 210, 250 directly and via a server 330. Figure 3 is another embodiment of the present invention showing that communication of all the data used to setup and configure the digital twin can also be first saved from the physical device onto a server 330 to build appropriate database and perform any data management and treatment (for example, data management and treatment can comprise data structuring in usable standard formats, data sorting and mining, dimensionality reduction if it may be necessary, etc.). This facilitates also integrating of data coming from different sources that may constitute a collection of physical devices working coherently as a system. Some aspects of the data can be exchanged directly between the physical device and its digital twin.

In Figure 3, the data extracted from the physical device 200 is communicated 310 to the storage server 330 or communicated to the edge/cloud 300 where the data is stored and archived over a period of time. The data can be communicated 320 from the server 330 to the edge/cloud 210, 250. Such historical data can be used to improve fidelity of digital twin. The data could include state of equipment, disturbances in formats of IEEE COMTRADE files or network communication log files. The configuration manager, from either the physical device or the digital twin, can help bridge the information and data and also facilitate storing of processed data. Availability of such historical perspectives can be used to identify known and unknown patterns in the device behavior using, for instance, supervised and unsupervised ML implementations. The ML implementation could use both the non-operational as well as the operational data combination captured from the real system.

The configuration and construction of the digital twin therefore would require a bi-directional flow of data from the physical device to its digital twin and back. This is facilitated through the communication engine that is provided. The communication engine consists of a communication framework that helps in facilitating a connected data flow of the product's data throughout its lifecycle for both the run-time data and configuration settings information. The digital twin can communicate with its physical counterpart using HTTP/TCP based standard communication protocols.

The virtual model or digital twin hosted on a computing system (i.e., cloud or edge device) receives electrical signals, the configuration parameters that comprise operational data and non-operational data. The virtual model/digital twin is trained with the received signal data that includes measured parameters from the IED, configuration parameters and simulated data of the measured parameters. The virtual model determines performance parameters like time of execution, latency, accuracy etc for a first instant of time and a second instant of time, by running a virtual application function on the virtual model for example Overcurrent function. The first performance parameter is determined for a virtual application function and the virtual model trains, learns and adapts itself based on the received configuration parameters and measured signals by updating configurations or functional parameters of the virtual application function. The configurations or functional parameters of the application function can be co-efficients of mathematical functions used in the application function.

This is the process of training and learning where the training module captures the values of measured current or voltage or other configuration parameters and labels the data. Then the application function listens to these labelled data and implements ML algorithms for performance enhancement and the second performance parameters are determined using the adapted virtual model. A comparison is performed between the determined first performance parameter and second performance parameter with a preset performance threshold to determine any improvement in the performance parameters in terms of accuracy, time to operate etc. The functional parameters or configurations of the virtual application function is transmitted to the physical device or IED if an improvement is determined. A significant difference between the first performance parameter and second performance parameter needs to be reached for transmission of the configurations to the physical device. For example, the preset performance threshold can be a 10 percent improvement. If the improvement is lesser, the training is continued till the threshold is achieved.

Once this improvement is observed some self tests are run as to ensure quality of services. Training module is involved in comparison which is checking the work of the function in terms of performance parameter like timing, accuracy, time to operate, in case of application Function, and in case of Communication it is Round Trip Time, Latency, which are used for comparison of functions.

The initial model is created using supporting data, in real time or near real time, to build a complete picture of the object or device. Once constructed and deployed, the digital twin can help in detecting possible issues, test new settings, simulate different use scenarios. The digital twins can also be deployed to analyse, learn, and predict their future states from their own real-world data.

The virtual model is configured for first time with actual data from IED and has same capability as physical IED, however the process of continuously receiving configurations and simulated data improves the virtual model to perform better.

In this way, systems can use their own behaviour to train accurate behavioural models. The training could be performed via artificial intelligence (AI) and machine learning (ML) algorithm implementations using the historical data which forms the input to the learning algorithms. The output of any ML algorithm is a model, which can predict new results. A data engineer can fine-tune the learning algorithm and obtain different models which can correspond to different configurations of the physical device or different test cases that the physical device can be subjected to. The models that produces the best results is used to update the physical device for improved performance and adaptive behavior.

Training data is obtained from the physical device and the historical data associated with it. The training data can be provided in various formats such as common format for Transient Data Exchange for power systems (COMTRADE), which is a standard format for recorded disturbance data or communication network log files, event logs. The physical device could be, for instance, a three-phase circuit breaker that is sized for a given application to protect the circuit and the cables. A historical data corresponding to the current inputs and the corresponding circuit breaker response can constitute a training data.

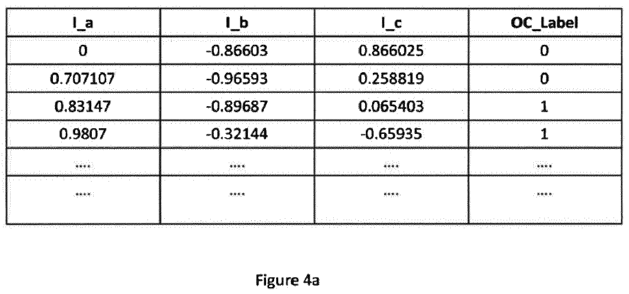

Figure 4a represents one such training data. Nature (such as time duration) and amplitude of the currents going as input to the CB facilitates the control of CB by opening and closing of the breakers leading to over current (OC) protection. The current data could correspond to sampling at some periodic intervals such as every microsecond. The CB, under some configuration of the current in the three phases, leads to OC protection that typically can occur due to electrical shorts and overloads. With reference again to Figure 4a, the rows one and two, for instance, have current low enough that no OC is required on part of the CB. On the other hand, rows three and four, have currents in one or more phases that are beyond the safety rating of the equipment and therefore, the OC is enabled is such a case. Such protection devices can be monitored to be controlled such that the CB does not trip on momentary or short-term overcurrent events that could be normal for the device it is protecting. Such instances could be, for instance, in-rush current or short-term overcurrents as a motor starting surge. The training data can provide the breaker the ability to discriminate between normal and damaging overcurrents.

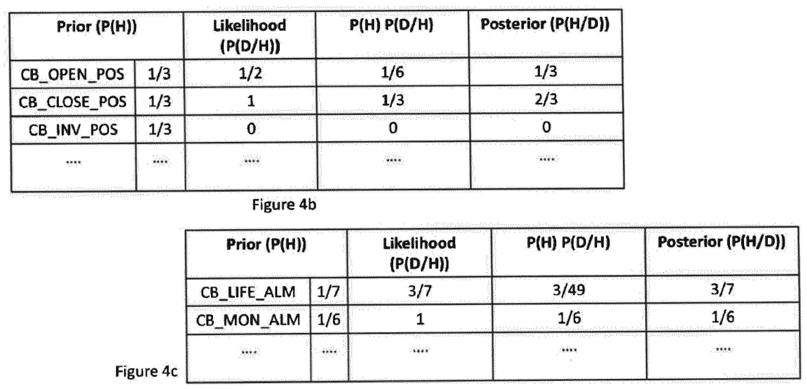

Figures 4b and 4c show another set of training data for the case of a circuit breaker monitoring. The status of the circuit breaker (CB) is indicated with the CB_OPEN_POS, CB_CLOSE_POS, CB_INV_POS that represents for the CB being in open, intermediate and closed position respectively. It provides a Naive Bayes Classification and Likelihood Table for indication/status of the CB Open position (H) and Close (D) position. and also produces Alarms on Monitoring. The Naive Bayes algorithm provides a method to calculate posterior probability P(H|D) from prior probabilities P(H) and P(D|H). The probability P(H) represents the prior belief about a hypothesis, H, on the position of the CB. The probability P(D|H) is the probability of CB_CLOSE_POS ( = D) given the hypothesis, H. That is, P(D|H) is the likelihood which is the probability of CB_CLOSE_POS given the hypothesis. The probability table is generated from observed data and history on the CB positions. the Training module on the twin listens to the training data and creates probability tables.

The training data, such as the ones represented in Figures 4a, 4b, and 4c, is first executed on the digital twin that is implemented on the edge or/and the cloud. Results of the execution are then compared with the performance of those functional aspects of the physical device. The performance comparison could constitute of various performance parameters or metrics in terms of faster execution, time to operate, prediction capability with the existing functions. The Configuration Manager is responsible for application configuration and mapping. Application configuration could consist of such processes as identifying the precedence order of the application function module execution, identifying functions that could be adaptive, synchronizing the temporal characteristics of either synchronous or asynchronous data transfer between different application etc. The mapping can consist of identifying which adaptive functions are implemented with which learning paradigm. For example, classification tasks could be performed by deep learning / neural network models, Bayes-Classifiers, logistic regression, and support-vector-machines (SVMs). Each of these have a variety of parameters that can be further tweaked to generate different ML models.

An edge device running the functions on real data in passive/test mode acts on the measured inputs and triggers the start/operate of a function. By watching the inputs and outputs of existing functions, it is possible to label when function executes and when it does not. (Watching is done by listening to data model values). Labeling is done on the training module at the edge/cloud. In another case for a condition monitoring function like CB Monitoring the probability table prepared on naive bayes classification can be done by the training module.

Training module listens to (preprocessed) inputs and outputs and labels the samples for training leading to preparing probability tables (such as one shown in Figure 4) or training result set; Configuration Manager analyzes the possible positioning of the function thereby leading to new configuration verified on the edge device and compared with previous baseline for improved performance;

The configuration manager therefore holds information on functions that have undergone training and learning. It also holds the results of the learning process. Hence, a search on configuration manager leads to the functions and signals which could benefit from the learning. These identified functions form part of the adaptive functions.

Based on such information, the configuration manager auto-creates a configuration file. The thus prepared configuration files is executed on the twin to perform test run to ensure it improves the existing functions of the device by significant level. The improvements could be tracked through various performance metrices such as speed of function execution, time to operate or perform an action, fraction of rightly classified device states or/and error codes etc. The configuration files that result in any significant improvements becomes part of the training data. The training data could also include labelled data if a supervised learning algorithm such as support vector machine (SVM) is implemented for learning. The training data could also be just a set of arrays representing matrix or vectors as obtained from the field data. In case of Naive Bayes learning algorithm, the training data could be likelihood estimates or tables with the configuration information and the data in formats like arrays/tables etc. The training data is provided to the Target or physical device as an update. The adaptive function on the target or physical device then takes such training data as its input to replicate similar the performance improvements that was established on the digital twin. Furthermore, a generic Adaptive Function could be deployed on the target physical device which, based on the resultant labelled data, can Load the data and execute/predict the logic based on such data. The labelled data can also include the status inputs received from field which could be binary or analog. Such a feedback mechanism could change the probability distribution and hence enable Bayesian Belief Networks. Even in Deep Learning scenarios it is required to consider such feedback mechanism. Control System can look for indications/states/interlocking considerations before taking action.

The overall process that involves various interactions between the physical device and its digital twin. The first step involves identifying the physical device that needs simulated to through constructing of its digital twin. As mentioned earlier, this could be any embedded or non-embedded device. A digital twin is subsequently constructed on an edge device (such a local server) or/and on a cloud infrastructure. The construction could be accomplished using any programming language on any platform (such a linux) using various physics-based and data-driven models. Various techniques could be utilized such as finite element models for physical processes, Finite state machine and neural networks can be applied to describe the behavior/response processes, etc. The digital twin is calibrated and validated before further utilizing it to ensure accuracy is modelling and simulation. This is performed typically though comparing the inputs and outputs of models with physical devices under similar conditions. The digital twin models run synchronously and evolve together along with the physical counterparts.

Once the calibration and validation is complete, various device configurations and data generated on the physical device can be communicated to the digital twin for various services such as modelling, analysis, health prediction, process optimization, etc. The communication is supported through communication engines on the physical device and the digital twin and can use various communication protocols such as open platform communication (OPC), modbus, profibus etc. The next step involves using AI/ML to make applications functions adaptive. This involves using both operation and non-operational data. This training and learning process provides the functions with features such as self-healing and self-optimization. The functions that meet any pre-set standards for performance enhancement can be identified. These functions can then be packaged and uploaded onto the physical device as an update. This provides the physical device with the same enhanced performance and features that was simulated on the digital twin.

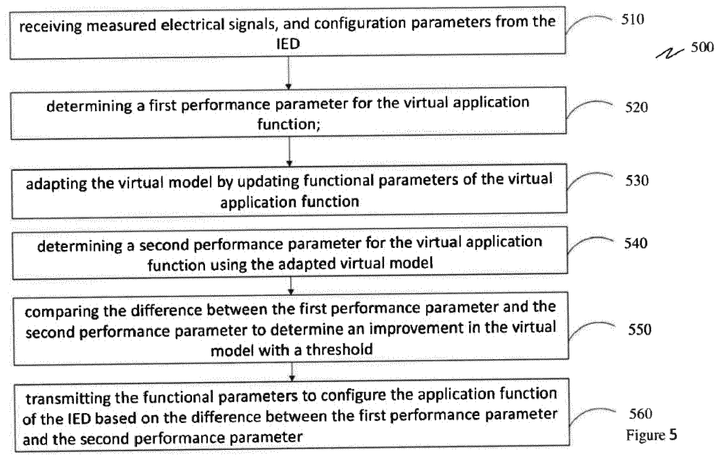

Figure 5 shows the method 500 for configuring an IED that is connected in an electrical network for protection and control of an electrical equipment. The protection and control is performed by analysis of measured electrical signal with the application function comprised in the IED. A trip signal is generated to operate a circuit breaker connected in series with the electrical equipment for this purpose. The IED is communicatively connected to a virtual model hosted on a computing system, the virtual model configured as a digital twin of the IED. The communication protocol for communication between the IED and the virtual model can be an open platform communication (OPC), a modbus, and a profibus.

At step 510 for training the virtual application/adaptive function a plurality of measured electrical signals, and configuration parameters associated with measured electrical signals, the application function and status of equipment from the IED are being received by the computing system hosting the virtual model.

At step 520 a first performance parameter for the virtual application function is determined using the virtual model. The first parameter is determined for a virtual application function by running the virtual application function. At step 530 the virtual model adapts itself based on the received configuration parameters and measured signals by updating configurations or functional parameters of the virtual application function. The configurations or functional parameters of the application function can be co-efficients of mathematical functions used in the application function.

This is the process of training and learning where the training module captures the values of measured current or voltage or other configuration parameters and labels the data.

At step 540, a second performance parameter is determined for the virtual application function using the adapted virtual model. The application function listens to these labelled data and implements ML algorithms for performance enhancement and the second performance parameters are determined using the adapted virtual model.

At step 550, a comparison is performed between the determined first performance parameter and second performance parameter with a preset performance threshold to determine any improvement in the performance parameters in terms of accuracy, time to operate etc.

At step 560, the functional parameters or configurations of the virtual application function is transmitted to the physical device or IED if an improvement is determined. A significant difference between the first performance parameter and second performance parameter needs to be reached for transmission of the configurations to the physical device. For example, the preset performance threshold can be a 10 percent improvement. If the improvement is lesser, the training is continued till the threshold is achieved.

The Digital Twin implemented on edge device is also provided with a training engine that constitutes of a training module. The training module trains also on live data. The data is now labelled / classified at the digital twin (using approaches like SVM). In another instance, the data is used to prepare a Naive Bayes classification leading to preparation of Probability and Likelihood tables preparing itself for Bayesian Belief Network approach. The Digital Twin implemented on the Cloud is also provided with a training and optimization engine., The cloud is provided with capability to work on datasets across many different devices. The functions which are identified for learning are defined in configuration of Training module. The Data used for training include combination of non-operation data including disturbance files which hold samples captured during faults, captured during normal operation and alarms and events or operational data like Circuit Breaker position. The training method is selected by the training module based on probability (or training data) and also based on the errors identified in earlier analysis. The training method can also be selected based on the problem formulation. For instance, a classification task where the circuit breaker should operate based on the classification of the current as being overload current (OC), training examples can be performed by deep learning / neural network models, decision trees, Bayes-Classifiers, logistic regression, and support-vector-machines (SVMs). Different configuration of the twin implementation could use different learning algorithm. For new functions the learning is performed by letting know the inputs and output signals or parameters and the expected goals as result described as a virtual output.

The training engine listens to the execution of functions and identify patterns and capture the learning as training data.

The two different types of functions include Application Functions and Service Functions. The application functions constitute of execution aspects, algorithm and internal data. The Service Functions is related to communication like protocols constitute behavior aspects and formatting aspects. The behavior aspects could constitute of such elements as Request/Response that has a behavior pattern of a client-serve architecture. The formatting aspects of the service function could include such elements as encoders/decoders for data formats such as JSON/XML/ or any other native formats that may be compatible with the device.

In another embodiment the adaptive function might be a communication Function. For Communication Functions learning the training data could include formats like Specification Description language (SDL) or network log files like packet capture (pcap) files. The learning follows following approaches including Feature Extraction and pattern matching applying drawing histograms of instance for identifying the Application Protocol Data Unit and Application Protocol Service Units. For behaviour identification the sequence is learnt using SDL and integrated as aligned to network capture. In this case the Adaptive Function can have a basic Finite State Machine that responds to external events and produces actions. The actions generated depend on the past history of the system, i.e. its state. The event, for instance, could be overload current and the response could be opening the position of the circuit breaker that has only two finite state that of open and close. A map file is generated with Input/output/setting unique id's mapped to specific protocol signal ( eg:modbus,mqtt,iec etc) from training module on the edge device. The individual states and the transitions between them can be maintained in a state diagram which is a map for the communication protocols and states (Begin state; need connection state; sent request state; no data state; error/failure state). The map also facilitates keeping track of the current state in the communication interface to the network

In another embodiment using the cloud as an extension with elastic resources, we could use data from multiple devices and correlate the functions better using tensor flow or similar deep learning capabilities due to availability of resources.

The method enable creation of configurations with the adaptive function based on output signals and the functions listened by adaptive function, a backtracking algorithm can be build which can be used to identify or predict the functions and signals really benefitting from the adaptive function. The function execution list is prepared with the improved / new function added. A hash code ( SHA -1 ) is generated for the above step. These signals are connected with adaptive functions and the connections rewired to connect to expected output. The function is included into the execution list following a process of adding to the list, shadow copying the list and putting it to execution in the next cycle.

Finally the method provides for executing the configuration and comparing results. The resulting configuration is executed on the digital twin on the edge and analyzed for various improvements such as faster operation time and accuracy. The improvements are tracked through a comparison performed with a previous configuration. In another case the function itself is replaced by creating connections in the data model or data store and configuration executed to compare the benefits. The training is performed for a pre-defined duration (such as an average of 48 hours) or until the time to reach a pre-set performance improvement (such as 10 percent improvement). If the improvement is lesser, the training is continued till the threshold is achieved. Once this improvement is observed some self tests are run as to ensure quality of services. Training module is involved in comparison which is checking the work of the function in terms of performance parameter like timing, accuracy, time to operate, in case of application Function, and in case of Communication it is Round Trip Time, Latency, which are used for comparison of functions.

Finally the method provides for packaging and pushing the training data to target device or IED. The training results and the configuration created are packaged are pushed to target device through secure channels also in signed or encrypted form as to make sure it is authentic. The file is pushed to the device and validated based on the public/private key. The IED or target device consumes the adaptive function. The Target (or physical) device will rewire/configure itself based on learning obtained from edge and consume the application function by executing the new configuration. This is performed without disrupting the execution by adding to execution list.

In an exemplary embodiment, overcurrent protection schemes are integrated into power system designs or circuit designs to protect the devices and equipment from the excessive overcurrent which could otherwise damage system components if not cleared within the safe time window. The Overcurrent Function can be considered as a classification problem and classified as No_Overcurrent and Yes_Overcurrent. The physical device could be a system that comprises of protective relay IED for monitoring, a circuit breaker (CB) that can respond to the condition of overcurrent, and a control circuit that controls the signal to the CB. Sensors monitor the current flowing through the transmission path. Various sensors such as current transformers (CT), voltage transformers (VT), Binary Input (BI) sensor, Binary output (BO) sensor can be used to send, among other parameters, the current level information to the protective relay IED equipment. The relay equipment can determine whether a fault current exists. The fault current could be from a short circuit or overload or ground fault. If a fault current is detected, the protective relay IED sends a trip signal to the appropriate breaker control device. The breaker control device can in turn send appropriate signals that facilitates the circuit breaker to trip open.

Such data gathered can used to provide in configuration for Training module. The Training module will listen to the Function from Datastore in terms of Input and Output signals as well as settings. The Training module can also train on live (or run-time) data. The data is labelled / classified at the digital twin (using approaches like SVM) . In another instance, the data can be used to prepare a Naive Bayes classification leading to preparation of Probability and Likelihood tables preparing itself for Bayesian Belief Network approach. Data from the field can be acquired through various sensors and saved locally in the data repository. Thus a historical database can be maintained which constitutes of field data acquired over a period of time. The data repository can hold both the operational and the non-operational data. The operational data could correspond to the real-time signals, status, and performance information. Example of such data could include information regarding status of circuit breaker (open/closed), the line current information, bus voltage data, etc.

The non-operation data could consist of information related to historical record from disturbance and fault recorder, wear and lubrication information on the circuit breakers, any maintenance logs of various devices,

The Training can be done using data from field or data by replaying Disturbance Recording files in various formats such as the IEEE COMTRADE Format or sample files in any format. The training module can use a Support Vector Machine (SVM) Supervised Learning algorithm to perform training. SVM classifies the data into two classes - NO_Overcurrent and Yes_Overcurrent. The results of this classification can be saved as a Result Set (RS). Once the classification of the data is complete and all results saved on the RS, it can be analyzed to make sure the errors are minimal. The Result Set is loaded into the Adaptive Function on the edge device. A Configuration is prepared by adding connections in Data Store. The adaptive Function is now added to execution list and compared for improvement. Once the threshold is reached and Quality is analyzed by running self tests, the Result Set together with prepared Configuration is packaged and passed to the Target Device in digitally signed form. The Adaptive Function is now loaded with the data and configuration applied using Configuration Manager and it starts executing on target (physical) Device.

This written description uses examples to describe the subject matter herein, including the best mode, and to enable any person skilled in the art to make and use the subject matter. The patentable scope of the subject matter is defined by the claims, and may include other examples that occur to those skilled in the art.

## Claims

1. A method for configuring an intelligent electronic device (IED) (100) connected in an electrical network for protection and control of an electrical equipment by analysis of measured electrical signal with at least one application function (105, 115) comprised in the IED (100) and by generating a trip signal to operate a circuit breaker connected in series with the electrical equipment, **characterized in that** the IED (100) is communicatively connected to a virtual model hosted on a computing system, the virtual model configured as a digital twin (210, 250) of the IED (100), and wherein the virtual model comprises at least one virtual application function (105, 115) corresponding to the at least one application function (105, 115) of the IED (100) , the method comprising the computing system performing the steps:
a. firstly, (510) receiving a plurality of measured electrical signals as well as configuration parameters associated with measured electrical signals, the at least one application function (105, 115) and status of equipment from the IED (100);
b. secondly, (520) determining at least one first performance parameter for the at least one virtual application function using the virtual model;
c. thirdly, (530) adapting the virtual model based on the received plurality of measured electrical signals and configuration parameters for the at least one virtual application function by updating functional parameters of the at least one virtual application function;
d. fourthly, (540) determining at least one second performance parameter for the at least one virtual application function using the adapted virtual model;
e. fifthly, (550) comparing the difference between the at least one first performance parameter and the at least one second performance parameter to determine an improvement in the virtual model for the at least one application function (105, 115) with a preset performance threshold;
f. finally, (560) transmitting functional parameters of the at least one virtual application function comprised in the virtual model to configure the corresponding at least one application function (105, 115) of the IED (100) based on significance of the difference between the at least one first performance parameter and the at least one second performance parameter.

2. The method as claimed in claim 1, wherein the measured electrical signal is at least one of a current signal and a voltage signal.

3. The method as claimed in claim 1, wherein the configuration parameters comprises data related to circuit breaker close/open status, line current, bus voltage, transformer loading data, events, alarms, disturbance and fluctuation records, circuit breaker lubrication and contact wear data or maintenance related data.

4. The method as claimed in claim 1, wherein the first performance parameter comprises performance parameters obtained at a first instant of time, and the second performance parameter comprises performance parameters obtained at a second instant of time, wherein the performance parameters comprises accuracy, time to operate, round trip time, latency, metrics in terms of faster execution and prediction capability.

5. The method as claimed in claim 1, wherein adapting the virtual model based on the received plurality of measured electrical signals and configuration parameters comprises labelling samples by obtaining pre-processed inputs and outputs and labelling the samples for training leading to preparing probability tables or training result set.

6. A system for configuring an Intelligent Electronic Device (IED) for providing an improved performance of the IED, the system comprising an IED as a physical device (110) connected in an electrical network for protection and control of an electrical equipment by analysis of measured electrical signal with at least one (105, 115) comprised in the IED (110) and by generating a trip signal to operate a circuit breaker connected in series with the electrical equipment, **characterized in that** the IED is communicatively connected to a virtual model (210) hosted on a computing system, the virtual model configured using the real-time or near real-time data configurations as a digital twin (210, 250) of the IED (110), and wherein the virtual model comprises at least one virtual application function corresponding to the at least one application function (105, 115) of the IED, the computing system configured to:
a. firstly, (510) receive a plurality of measured electrical signals as well as configuration parameters associated with measured electrical signals, the at least one application function (105, 115) and status of equipment from the IED;
b. secondly, (520) determine at least one first performance parameter for the at least one virtual application function using the virtual model;
c. thirdly, (530) adapt the virtual model based on the received plurality of measured electrical signals and configuration parameters for the at least one virtual application function by updating functional parameters of the at least one virtual application function;
d. fourthly, (540) determine at least one second performance parameter for the at least one virtual application function using the adapted virtual model;
e. fifthly, (550) compare the difference between the at least one first performance parameter and the at least one second performance parameter to determine an improvement in the virtual model for the at least one application function (105, 115) with a preset performance threshold;
f. finally, (560) transmit functional parameters of the at least one virtual application function comprised in the virtual model to configure the corresponding at least one application function (105, 115) of the IED based on significance of the difference between the at least one first performance parameter and the at least one second performance parameter.

7. The system as claimed in claim 6, wherein the computing system is at least one of an edge device, a cloud computing node, and a combination of the edge device and the cloud computing node.

## Patentansprüche

1. Verfahren zum Konfigurieren einer intelligenten elektronischen Vorrichtung IED (100), die in einem elektrischen Netz zum Schutz und zur Steuerung eines elektrischen Geräts durch Analyse eines gemessenen elektrischen Signals mit mindestens einer in der IED (100) enthaltenen Anwendungsfunktion (105, 115) und durch Erzeugen eines Auslösesignals zur Betätigung eines mit dem elektrischen Gerät in Reihe geschalteten Leistungsschalters verbunden ist, **dadurch gekennzeichnet, dass** die IED (100) kommunikativ mit einem auf einem Datenverarbeitungssystem gehosteten virtuellen Modell verbunden ist, das virtuelle Modell als digitaler Zwilling (210, 250) der IED (100) ausgelegt ist und wobei das virtuelle Modell mindestens eine virtuelle Anwendungsfunktion (105, 115) umfasst, die der mindestens einen Anwendungsfunktion (105, 115) der IED (100) entspricht, wobei das Verfahren umfasst, dass das Datenverarbeitungssystem die folgenden Schritte ausführt:
a. als Erstes (510) Empfangen mehrerer gemessener elektrischer Signale sowie von gemessenen elektrischen Signalen zugeordneten Konfigurationsparametern, der mindestens einen Anwendungsfunktion (105, 115) und des Status von Geräten von der IED (100);
b. als Zweites (520) Bestimmen mindestens eines ersten Leistungsfähigkeitsparameters für die mindestens eine virtuelle Anwendungsfunktion unter Verwendung des virtuellen Modells;
c. als Drittes (530) Anpassen des virtuellen Modells auf der Basis der empfangenen mehreren gemessenen elektrischen Signale und Konfigurationsparameter für die mindestens eine virtuelle Anwendungsfunktion durch Aktualisieren von Funktionsparametern der mindestens einen virtuellen Anwendungsfunktion;
d. als Viertes (540) Bestimmen mindestens eines zweiten Leistungsfähigkeitsparameters für die mindestens eine virtuelle Anwendungsfunktion unter Verwendung des angepassten virtuellen Modells;
e. als Fünftes (550) Vergleichen der Differenz zwischen dem mindestens einen ersten Leistungsfähigkeitsparameter und dem mindestens einen zweiten Leistungsfähigkeitsparameter zur Bestimmung einer Verbesserung in dem virtuellen Modell für die mindestens eine Anwendungsfunktion (105, 115) mit einer voreingestellten Leistungsfähigkeitsschwelle;
f. als Letztes (560) Übertragen von Funktionsparametern der mindestens einen in dem virtuellen Modell enthaltenen virtuellen Anwendungsfunktion zum Konfigurieren der entsprechenden mindestens einen Anwendungsfunktion (105, 115) der IED (100) auf der Basis von Signifikanz der Differenz zwischen dem mindestens einen ersten Leistungsfähigkeitsparameter und dem mindestens einen zweiten Leistungsfähigkeitsparameter.

2. Verfahren nach Anspruch 1, wobei das gemessene elektrische Signal ein Stromsignal und/oder ein Spannungssignal ist.

3. Verfahren nach Anspruch 1, wobei die Konfigurationsparameter Daten in Bezug auf Geschlossen/Offen-Status des Leistungsschalters, Leitungsstrom, Busspannung, Transformatorbelastungsdaten, Ereignisse, Alarme, Störungs- und Fluktuationsaufzeichnungen, Leistungsschalterschmierungs- und Kontaktabnutzungsdaten oder wartungsbezogene Daten umfassen.

4. Verfahren nach Anspruch 1, wobei der erste Leistungsfähigkeitsparameter zu einem ersten Zeitpunkt erhaltene Leistungsfähigkeitsparameter umfasst und der zweite Leistungsfähigkeitsparameter zu einem zweiten Zeitpunkt erhaltene Leistungsfähigkeitsparameter umfasst, wobei die Leistungsfähigkeitsparameter Genauigkeit, Betriebszeit, Gesamtlaufzeit, Latenz, Metriken im Hinblick auf schnellere Ausführung und Prädiktionsfähigkeit umfassen.

5. Verfahren nach Anspruch 1, wobei Anpassen des virtuellen Modells auf der Basis der empfangenen mehreren gemessenen elektrischen Signale und Konfigurationsparameter Kennzeichnen von Stichproben durch Erhalten von vorverarbeiteten Eingaben und Ausgaben und Kennzeichnen der Stichproben für Training, was zur Erstellung von Wahrscheinlichkeitstabellen oder Trainingsergebnismenge führt, umfasst.

6. System zum Konfigurieren einer intelligenten elektronischen Vorrichtung IED zur Gewährleistung einer verbesserten Leistungsfähigkeit der IED, wobei das System eine IED als physische Vorrichtung (110) umfasst, die in einem elektrischen Netz zum Schutz und zur Steuerung eines elektrischen Geräts durch Analyse eines gemessenen elektrischen Signals mit mindestens einer in der IED (110) enthaltenen Anwendungsfunktion (105, 115) und durch Erzeugen eines Auslösesignals zur Betätigung eines mit dem elektrischen Gerät in Reihe geschalteten Leistungsschalters verbunden ist, **dadurch gekennzeichnet, dass** die IED kommunikativ mit einem auf einem Datenverarbeitungssystem gehosteten virtuellen Modell (210) verbunden ist, das virtuelle Modell unter Verwendung der Echtzeit- oder Nahezu-Echtzeit-Datenkonfigurationen als digitaler Zwilling (210, 250) der IED (110) ausgelegt ist und wobei das virtuelle Modell mindestens eine virtuelle Anwendungsfunktion umfasst, die der mindestens einen Anwendungsfunktion (105, 115) der IED entspricht, wobei das Datenverarbeitungssystem zu Folgendem ausgelegt ist:
a. als Erstes (510) Empfangen mehrerer gemessener elektrischer Signale sowie von gemessenen elektrischen Signalen zugeordneten Konfigurationsparametern, der mindestens einen Anwendungsfunktion (105, 115) und des Status von Geräten von der IED;
b. als Zweites (520) Bestimmen mindestens eines ersten Leistungsfähigkeitsparameters für die mindestens eine virtuelle Anwendungsfunktion unter Verwendung des virtuellen Modells;
c. als Drittes (530) Anpassen des virtuellen Modells auf der Basis der empfangenen mehreren gemessenen elektrischen Signale und Konfigurationsparameter für die mindestens eine virtuelle Anwendungsfunktion durch Aktualisieren von Funktionsparametern der mindestens einen virtuellen Anwendungsfunktion;
d. als Viertes (540) Bestimmen mindestens eines zweiten Leistungsfähigkeitsparameters für die mindestens eine virtuelle Anwendungsfunktion unter Verwendung des angepassten virtuellen Modells;
e. als Fünftes (550) Vergleichen der Differenz zwischen dem mindestens einen ersten Leistungsfähigkeitsparameter und dem mindestens einen zweiten Leistungsfähigkeitsparameter zur Bestimmung einer Verbesserung in dem virtuellen Modell für die mindestens eine Anwendungsfunktion (105, 115) mit einer voreingestellten Leistungsfähigkeitsschwelle;
f. als Letztes (560) Übertragen von Funktionsparametern der mindestens einen in dem virtuellen Modell enthaltenen virtuellen Anwendungsfunktion zum Konfigurieren der entsprechenden mindestens einen Anwendungsfunktion (105, 115) der IED auf der Basis von Signifikanz der Differenz zwischen dem mindestens einen ersten Leistungsfähigkeitsparameter und dem mindestens einen zweiten Leistungsfähigkeitsparameter.

7. System nach Anspruch 6, wobei das Datenverarbeitungssystem eine Edge-Vorrichtung und/oder ein Cloud-Datenverarbeitungsknoten und/oder eine Kombination der Edge-Vorrichtung und des Cloud-Datenverarbeitungsknotens ist.

## Revendications

1. Procédé de configuration d'un dispositif électronique intelligent (IED) (100) connecté dans un réseau électrique pour la protection et la commande d'un équipement électrique par analyse d'un signal électrique mesuré à l'aide d'au moins une fonction d'application (105, 115) comprise dans l'IED (100) et par génération d'un signal de déclenchement pour faire fonctionner un disjoncteur connecté en série avec l'équipement électrique,
**caractérisé en ce que** l'IED (100) est connecté par voie de communication à un modèle virtuel hébergé sur un système informatique, le modèle virtuel étant configuré en tant que jumeau numérique (210, 250) de l'IED (100), et dans lequel le modèle virtuel comprend au moins une fonction d'application virtuelle (105, 115) correspondant à ladite au moins une fonction d'application (105, 115) de l'IED (100), le procédé comprenant l'exécution par le système informatique des étapes suivantes :
a. en premier lieu, (510) la réception en provenance de l'IED (100) d'une pluralité de signaux électriques mesurés ainsi que de paramètres de configuration associés à des signaux électriques mesurés, à ladite au moins une fonction d'application (105, 115) et à l'état de l'équipement ;
b. en deuxième lieu, (520) la détermination d'au moins un premier paramètre de performances pour ladite au moins une fonction d'application virtuelle en utilisant le modèle virtuel ;
c. en troisième lieu, (530) l'adaptation du modèle virtuel sur la base de la pluralité reçue de signaux électriques mesurés et de paramètres de configuration pour ladite au moins une fonction d'application virtuelle par mise à jour de paramètres fonctionnels de ladite au moins une fonction d'application virtuelle ;
d. en quatrième lieu, (540) la détermination d'au moins un deuxième paramètre de performances pour ladite au moins une fonction d'application virtuelle en utilisant le modèle virtuel adapté ;
e. en cinquième lieu, (550) la comparaison de la différence entre ledit au moins un premier paramètre de performances et ledit au moins un deuxième paramètre de performances pour déterminer une amélioration du modèle virtuel pour ladite au moins une fonction d'application (105, 115) avec un seuil de performances prédéfini ;
f. enfin, (560) la transmission de paramètres fonctionnels de ladite au moins une fonction d'application virtuelle comprise dans le modèle virtuel pour configurer ladite au moins une fonction d'application correspondante (105, 115) de l'IED (100) sur la base de l'importance de la différence entre ledit au moins un premier paramètre de performances et ledit au moins un deuxième paramètre de performances.

2. Procédé selon la revendication 1, dans lequel le signal électrique mesuré est au moins l'un d'un signal de courant et d'un signal de tension.

3. Procédé selon la revendication 1, dans lequel les paramètres de configuration comprennent des données relatives à un état de fermeture/ouverture de disjoncteur, un courant de ligne, une tension de bus, des données de charge de transformateur, des événements, des alarmes, des enregistrements de perturbations et de fluctuations, des données de lubrification de disjoncteur et d'usure de contact ou des données relatives à la maintenance.

4. Procédé selon la revendication 1, dans lequel le premier paramètre de performances comprend des paramètres de performances obtenus à un premier instant, et le deuxième paramètre de performances comprend des paramètres de performances obtenus à un deuxième instant, dans lequel les paramètres de performances comprennent une précision, un temps de fonctionnement, un temps d'aller-retour, une latence, des mesures exprimant une capacité d'exécution et de prédiction plus rapide.

5. Procédé selon la revendication 1, dans lequel l'adaptation du modèle virtuel sur la base de la pluralité reçue de signaux électriques mesurés et de paramètres de configuration comprend l'étiquetage d'échantillons par obtention d'entrées et de sorties prétraitées et l'étiquetage des échantillons pour un apprentissage conduisant à la préparation de tables de probabilité ou d'un ensemble de résultats d'apprentissage.

6. Système de configuration d'un dispositif électronique intelligent (IED) pour fournir des performances améliorées de l'IED, le système comprenant un IED en tant que dispositif physique (110) connecté dans un réseau électrique pour la protection et la commande d'un équipement électrique par analyse d'un signal électrique mesuré à l'aide d'au moins une fonction d'application (105, 115) comprise dans l'IED (110) et par génération d'un signal de déclenchement pour faire fonctionner un disjoncteur connecté en série avec l'équipement électrique,
**caractérisé en ce que** l'IED est connecté par voie de communication à un modèle virtuel (210) hébergé sur un système informatique, le modèle virtuel étant configuré en utilisant les configurations de données en temps réel ou en temps quasi réel en tant que jumeau numérique (210, 250) de l'IED (110), et dans lequel le modèle virtuel comprend au moins une fonction d'application virtuelle correspondant à ladite au moins une fonction d'application (105, 115) de l'IED, le système informatique étant configuré pour :
a. en premier lieu, (510) recevoir en provenance de l'IED une pluralité de signaux électriques mesurés ainsi que des paramètres de configuration associés à des signaux électriques mesurés, à ladite au moins une fonction d'application (105, 115) et à l'état de l'équipement ;
b. en deuxième lieu, (520) déterminer au moins un premier paramètre de performances pour ladite au moins une fonction d'application virtuelle en utilisant le modèle virtuel ;
c. en troisième lieu, (530) adapter le modèle virtuel sur la base de la pluralité reçue de signaux électriques mesurés et de paramètres de configuration pour ladite au moins une fonction d'application virtuelle par mise à jour de paramètres fonctionnels de ladite au moins une fonction d'application virtuelle ;
d. en quatrième lieu, (540) déterminer au moins un deuxième paramètre de performances pour ladite au moins une fonction d'application virtuelle en utilisant le modèle virtuel adapté ;
e. en cinquième lieu, (550) comparer la différence entre ledit au moins un premier paramètre de performances et ledit au moins un deuxième paramètre de performances pour déterminer une amélioration du modèle virtuel pour ladite au moins une fonction d'application (105, 115) avec un seuil de performances prédéfini ;
f. enfin, (560) transmettre des paramètres fonctionnels de ladite au moins une fonction d'application virtuelle comprise dans le modèle virtuel pour configurer ladite au moins une fonction d'application correspondante (105, 115) de l'IED sur la base de l'importance de la différence entre ledit au moins un premier paramètre de performances et ledit au moins un deuxième paramètre de performances.

7. Système selon la revendication 6, dans lequel le système informatique est au moins l'un d'un dispositif de périphérie, d'un nœud informatique en nuage, et d'une combinaison du dispositif de périphérie et du nœud informatique en nuage.
